# EUROPEAN PATENT APPLICATION

(11) **EP 1 971 163 A2**
(43) Date of publication of application: **17.09.2008**
(21) Application number: 07022391.2
(22) Date of filing: 19.11.2007
(51) Int. Cl.: H04Q 7/32

(54) **Network parameter automatic configuration apparatus and method in portable terminal**

(30) Priority: 13.03.2007 KR 20070024305
(71) Applicant: Samsung Electronics Co., Ltd., Suwon-si, Gyeonggi-Do (KR)
(72) Inventor: Choi, Yong-Sek, Gangnam-gu Seoul (KR); Lee, Nam-Kyu, Seocho-gu Seoul (KR)
(74) Representative: Boakes, Jason Carrington

(57) **Abstract**

A network parameter automatic configuration apparatus and a method of a portable terminal are provided. The network parameter automatic configuration apparatus includes a memory, a configuration database, a smart card, a configuration searcher and a configuration processor, According to the present invention, without any addition user actions for network parameter configuration, the network parameters can be automatically configured and user convenience can be enhanced thereby.

## Description

### CLAIM OF PRIORITY

This application claims priority under 35 U.S.C. § 119(a) to an application filed in the Korean Intellectual Property Office on March 13, 2007 and assigned Serial No. 2007-24305, the entire contents of which are herein incorporated by reference.

### BACKGROUND OF THE INVENTION

### 1. Field of the Invention

The present invention relates generally to a network parameter automatic configuration apparatus and method of a portable terminal, and, in particular, to a network parameter configuration apparatus and method which searches a database of a portable terminal to initially configure network parameters of the portable terminal, automatically configures the network parameters when the database contains configuration information, and requests the configuration information from a provider server when the database contains no configuration information.

### 2. Description of the Related Art

Given the recent rapid advance of portable terminals, mobile phones enabling wireless voice telephony and information exchange are a necessity. At the initial stage, it was considered that it was sufficient for the portable terminals to merely enhance the wireless telephony with the portability. However, in keeping with technology advances and the introduction of wireless Internet, the application of the portable terminal covers not only telephony or schedule management but also image capture using an embedded digital camera, satellite broadcast viewing, game playing, and web surfing over the wireless Internet. As application of the portable terminal expands, contents requiring a network connection at the portable terminal increase. Accordingly, the number of network configuration parameters to be initially set also increases.

Examples of various services using wireless Internet include e-mail service, Multimedia Message Service (MMS), and wireless application protocol (wap) browsing. To use those services, it is necessary to access respective provider servers using radio resources. The services may have different parameters and different Access Point Name (APN) information. For the most part, the parameters differ according to the service provider. The parameter information configured to use the services is shown in Table 1.

**Table 1**

| Service type | | Network parameters |
|---|---|---|
| Browser | | Set name, Account handle, Number of bookmarks, Set name for AD channel, Account handle for AD Channel, Set name for Edit channel, Account handle for Edit Channel, Edit channel URL |
| Messenger | SMS | Expiration, Leave a copy, Reply path, Delivery report, Default type |
| | MMS | Preferred bearer, Set name, Account handle, Use PostCard, PostCard Address, Media Album upload URL, Media Album Browse URL, Priority, Class, Delivery, Hide Address, Expiration, Delivery report, Read reply, Leave a Copy, Add my name card, Add signature, Home network, Roaming network, Delivery report, Read reply, Anonymous reject, Reject Advertisement, Message size, Slide interval, Creation mode |
| | Email | Set name, Account handle, Use_accountl, Account1 name, Account1 Editable, Greeting Email, SMTP server address, SMTP port number, POP3 server address, POP3 port number, IMAP4 server address, IMAP4 port number, My Email Address, Pop3/IMAP4 User ID, Pop3/IMAP4 User Password, Receive Server Type, Receive Type, Provisioning Site, Use_account2, Account2 name, SMTP server address, POP3 server address, IMAP4 server address, My Email Address, Pop3/IMAP4 User ID, Pop3/IMAP4 User Password, Receive Server Type, Receive Type, Provisioning Site, Center address, Service Loading, Set name, Account handle, IM EMBEDBD_LINK, ActiveNetIndex, UseNetInfo_0, AccountName_0, Homedomain, IMPSUr1_0, UserId_0, Password_0, LoginType, DeliveryMethod, CurrentStatus, Notification, AutoLogin, AutoLogout |
| Java | | Set name, Account handle |
| Media Player | | Set name, Account handle |
| Embedded Links | | Java Download Server URL, Video Download Server URL, Ringtone Download Server URL, Picture Download Server URL, IM embeded link Server URL, Media album Download Server URL, Theme Download Server URL, Sounds/Music Download Server URL |
| Network | | PS power on attach |

For detailed information of the parameters of Table 1, see the standard specification "3GPP TS 24.008 TS23.040 Mobile radio interface layer 3 specification".

In general, the network parameters are configured when the service of the portable terminal is started. In a portable terminal manufactured to provide services of only one provider, the network parameters are rarely changed. By contrast, in a portable terminal which changes a communications service provider according to an inserted smart card, such as Subscriber Identity Module (SIM) card by authenticating the user using the smart card, the service provider may be changed even after the network parameters are initially configured by a vendor when the portable terminal is purchased.

For example, the service provider of the portable terminal can be changed when a user leaves the country with the SIM card and inserts the SIM card into a portable terminal which changes the communications provider or when the user inserts the SIM card into another portable terminal because of a discharged battery.

However, to configure the network parameters for a new communications provider, the network parameters must be acquired by accessing a web site of the service provider over the wired Internet and requesting network parameters of the user's intended service, or by making a call to the service center and requesting the network parameters through Over The Air (OTA) provisioning.

As discussed above, it is almost impossible to set the network parameters without the user taking some additional actions (e.g., making a call to a service center and selecting a necessary setup by accessing a web site). Hence, a majority of users who are unfamiliar with the network parameter configuration are likely to experience confusion and inconvenience until a service is properly set up.

### SUMMARY OF THE INVENTION

The present invention provides a network parameter automatic configuration apparatus and method in a portable terminal.

Another embodiment of the present invention provides an apparatus and method for automatically configuring network parameters by searching a database of a portable terminal when the network parameters of the portable terminal are initially set.

A further embodiment of the present invention provides an apparatus and method for configuring network parameters by searching a database of a portable terminal to initially configure network parameters of the portable terminal, automatically configuring the network parameters when the database contains configuration information, and requesting the configuration information from a provider server when the database contains no configuration information.

In a preferred embodiment, the above is implemented by providing a network parameter automatic configuration apparatus of a portable terminal including a memory for storing information relating to a designated communications provider and network parameter configuration information; a configuration database for storing network parameter configuration information of each of at least one pre-designated communications provider; a smart card for storing a first set of information relating to a service communications provider; a configuration searcher for searching for a second set of network parameter information corresponding to the service communications provider, which is requested by the smart card, in the configuration database; and a configuration processor for comparing the first set of information relating to the designated communications provider, which is stored in the memory, with a second set of information of the service communications provider requested by the smart card, when the first and second set of information do not match, searching for and retrieving as a result a set of network parameter information corresponding to the service communications provider requested by the smart card through the configuration searcher, and configuring a network using the network parameter information retrieved as a result of the searching.

According to one embodiment of the present invention, a network parameter automatic configuration method of a portable terminal is provided which includes when detecting a network parameter automatic configuration event, comparing a first set of information relating to a designated communications provider with a second set of information relating to a service communications provider requested by a smart card; when the first and second set of information do not match, searching for and retrieving as a result a set of network parameter information corresponding to the communications service provider requested by the smart card, in a configuration database which contains a set of network parameter configuration information for each of at least one communications provider; and when the network parameter information corresponding to the service communications provider requested by the smart card is retrieved, configuring a network using the retrieved set of network parameter information.

### BRIEF DESCRIPTION OF THE DRAWINGS

The features and advantages of the present invention will become more apparent from the following detailed description when taken in conjunction with the accompanying drawings in which;
FIG. 1 is an example of a block diagram of a portable terminal for automatically configuring network parameters, according to the present invention;
FIG. 2 is an example of a flowchart of a network parameter automatic configuration method of a portable terminal, according to the present invention; and
FIG. 3 is an example of a diagram of a message carrying configuration information received at a portable terminal, according to the present invention.

### DETAILED DESCRIPTION OF EXEMPLARY EMBODIMENTS

Exemplary embodiments of the present invention will be described herein below with reference to the accompanying drawings. In the following description, well-known functions and constructions are not described in detail since they would obscure the invention in unnecessary detail.

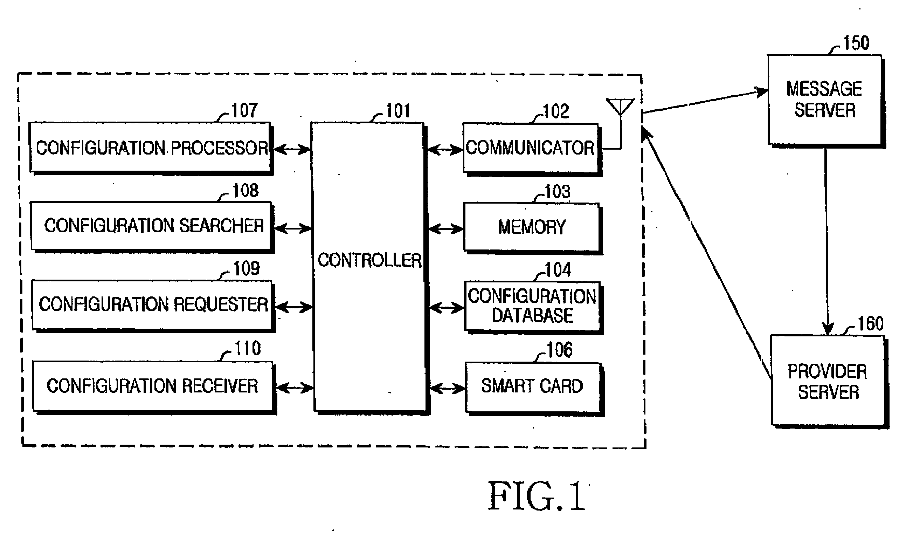

The present invention provides an apparatus and method for configuring network parameters by searching a database of a portable terminal for configuration information with which to initially configure network parameters of the portable terminal, automatically configuring the network parameters when the database contains configuration information, and requesting the configuration information from a provider server when the database contains no configuration information. The apparatus is now described by referring to FIG. 1.

FIG 1 is an example of a block diagram of a portable terminal for automatically configuring network parameters, according to an embodiment of the present invention. The portable terminal 100 of FIG 1 includes a controller 101, a communicator 102, a memory 103, a configuration database 104, a smart card 106, a configuration processor 107, a configuration searcher 108, a configuration requester 109, and a configuration receiver 110.

In the reception, the communicator 102 down-coverts a radio frequency signal received on an antenna and despreads and channel-decodes the converted signal. In the transmission, the communicator 102 channel-decodes, spreads, and up-converts data to be sent, and transmits the converted data over the antenna.

The memory 103 comprises stored programs for controlling the overall operation of the portable terminal 100, stored application programs, and stored data (phone numbers, SMS messages, compressed image files, and videos), and contains Mobile Country Code/Mobile Network Code (MCC/MNC) information of a current communications provider and network parameter configuration information.

The configuration database 104 contains and manages network parameter configuration information of each of at least one pre-designated communications provider and a set of network parameter configuration information of at least one communications provider who services the portable terminal 100.

The smart card 106 stores user authentication information and comprises a Subscriber Identity Module (SIM) card, for example. The smart card 106 stores a set of International Mobile Subscriber Identity (IMSI) information including a set of MCC/MNC information indicative of which at least one provider of which country services the subscriber.

The configuration processor 107 examines whether the set of MCC/MNC information stored to the memory 103 matches the set of MCC/MNC information of the smart 106 when the portable terminal 100 is powered-on or initialized. When the two sets of information do not match, the configuration processor 107 requests the configuration searcher 108 to retrieve a set of network parameter information corresponding to the set of MCC/MNC information of the smart card 106.

When the retrieved set of network parameter information is provided from the configuration searcher 108 or the set of network parameters received from a provider server 106 is fed from the configuration receiver 110, the configuration processor 107 controls configuration of the network parameters to provide services of the communications provider requested by the smart card 106 using the received network parameters. In doing so, the configuration processor 107 may inform the user of the types of services provided by the communications provider and configure only a selected service when the user selects his/her intended service from among those provided.

At the same time, the communications provider can change the set of network parameter information. When the network is configured using the set of network parameters downloaded to the terminal, a network error occurs. To avoid the error, when the configuration processor 107 detects the network error in the network configuration using the set of network parameter information provided from the configuration searcher 108, the configuration processor 107 requests that the configuration requester 109 generate and transmit a configuration information request message to reinstall the set of network parameters.

When the network parameter information corresponding to the set of MCC/MNC information of the smart card 106 is requested from the configuration processor 107, the configuration searcher 108 examines whether there is a set corresponding to the requested setoff network parameter information by searching the database 106. When the requested set of network parameter information is retrieved, the configuration searcher 108 provides the retrieved set of network parameter information to the configuration processor 107.

When the configuration database 106 does not contain the requested set of network parameter information corresponding to the set of MCC/MNC information of the smart card 106 according to the search result of the configuration searcher 108, the configuration requester 109 generates a configuration information request message for requesting the set of network parameter information and transmits the generated message to a provider server 160 via a message server 150. The configuration information request message generated at the configuration requester 109 requests Over The Air (OTA) provisioning to the provider server 160 for the network parameter configuration. The configuration information request message can be transmitted to the message server 150 using one of a Short Message Service (SMS) and an Unstructured Supplementary Service Data (USSD).

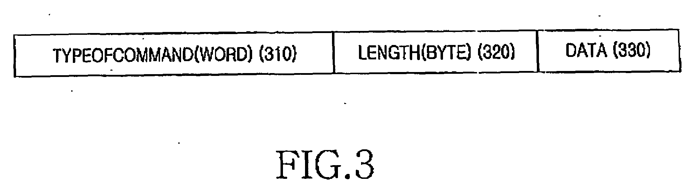

Upon receiving a configuration information response message including the requested set of network parameter information from the provider server 160, the configuration receiver 110 forwards the message to the configuration processor 107. The reception process of the set of network parameter information at the configuration receiver 110 conforms to the standard specification "OTA Provisioning spec". An example of a configuration information response message received from the provider server 160 is illustrated in FIG 3,

FIG 3 is an example diagram of a message carrying the configuration information received at the portable terminal, according to the present invention. The confirmation information response message received from the provider server 160 includes a TypeOfCommand 310, a data length 320, and data 330. as illustrated in FIG 3.

The TypeOfCommand 310, which is information which classifies the type of data 330, represents the classifications of Table 2 and can be extended in accordance with an increase of the services provided by the communications provider.

**Table 2**

| Classification | Description |
|---|---|
| 00 | request all configurations which are supported by the network. |
| 01 | request network to send the provisioning data for embedded wap browsing |
| 02 | for MMS sending/retrieving. |
| 03 | for Email sending/receiving |
| 04 | for PC browsing |
| 05 | reserved |

The length 320 indicates the size in bytes of the data 330. The data 330 carries the set of network parameter information to be configured.

The controller 101 controls the configuration processor 107, the configuration searcher 108, the configuration requester 109, and the configuration receiver 110. In other words, the controller 101 can perform any of the functions of the configuration processor 107, the configuration searcher 108, the configuration requester 109, and the configuration receiver 110. These components are separately provided to distinguish among their functions. Accordingly, in an actual product according to the present invention, the controller 101 may perform the functions of all or part of the configuration processor 107, the configuration searcher 108, the configuration requester 109, and the configuration receiver 110.

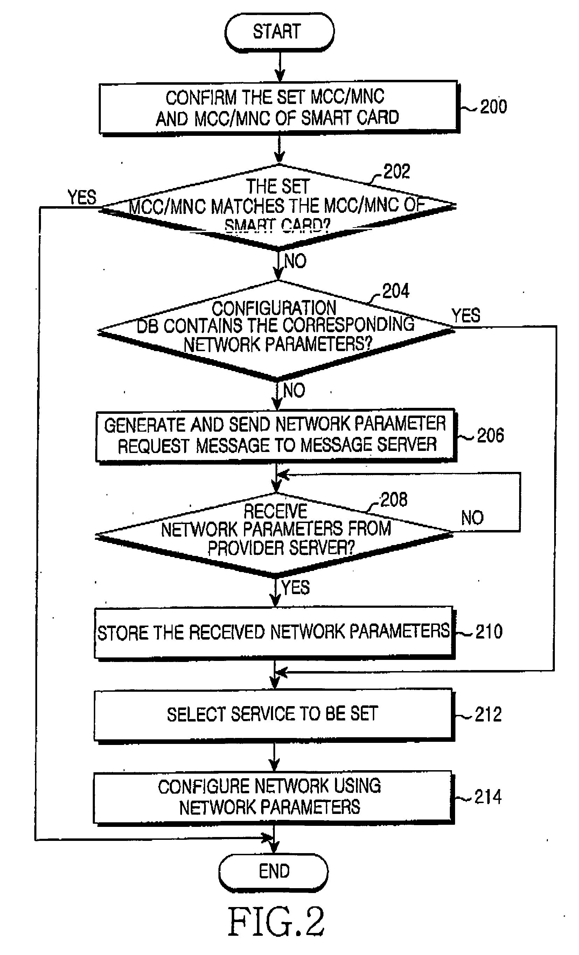

Next, a network parameter automatic configuration method of the portable terminal configured as above is described by referring to FIG 2, which is an example of a flowchart of a network parameter automatic configuration method of the portable terminal, according to the present invention.

Referring to FIG. 2, when the portable terminal is powered-on or initialized, it confirms the current set of MCC/MNC information and the set of MCC/MNC information of the smart card in step 200 and compares the current set of MCC/MNC information with the set of MCC/MNC information of the smart card in step 202. When the configured set of MCC/MNC information matches the set of MCC/MNC information of the smart card in step 202, the portable terminal terminates this process because network parameter configuration is not necessary.

When the configured set of MCC/MNC information does not match the set of MCC/MNC information of the smart card in step 202, the portable terminal searches for the set of network parameters corresponding to the set of MCC/MNC information of the smart card in the configuration database which contains the set of network parameter information of various communications providers, at step 204.

When the configuration database contains the set of network parameters corresponding to the set of MCC/MNC information of the smart card in step 204, the portable terminal receives the service to be configured from the user, which is selected by the user from among the available services at step 212, and sets the selected service using the retrieved set of network parameter information at step 214.

When the configuration database does not contain the set of network parameters corresponding to the set of MCC/MNC information of the smart card in step 204, the portable terminal generates a configuration information request message to request the set of network parameter information corresponding to the set of MCC/MNC information of the smart card and transmits the generated message to the provider server via the message server at step 206. The configuration information request message requests an OTA provisioning for the set of network parameter configuration from the provider server. The configuration information request message is transmitted to the message server using one of the SMS and the USSD.

When the configuration information response message, including the set of network parameters, is received from the provider server at step 208, the portable terminal stores the set of network parameter information at step 210 and receives a service to be set from the user, which is selected by the user from the available services, at step 212, and sets the selected service using the set of network parameter information at step 214.

The user's service selection at step 212 is performed according to the user's request. When the step 212 is not pre-defined, the portable terminal omits the step 212 and goes to step 214 to configure all possible sets of network parameters serviceable by the portable terminal.

By contrast, when the portable terminal configures the network at step 214 using the set of network parameters retrieved from the configuration database at step 204, a configuration error may occur because of the set of network parameter information changed by the communications provider. Thus, when the portable terminal detects an error in the network configuration, the portable terminal may return to step 206 to generate and transmit the configuration information request message so as to reinstall the set of network parameters.

As set forth above, the apparatus and method according to the present invention searches a database of a portable terminal to initially configure a set of network parameters of the portable terminal, automatically configures the set of network parameters when the database contains configuration information, and requests the set of configuration information from a provider server when the database contains no configuration information. Therefore, without the user's additional actions for the network parameter configuration, the set of network parameters can be automatically configured and user convenience can be increased.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A network parameter automatic configuration apparatus of a portable terminal, comprising:
a memory for storage of information that corresponds to a designated communications provider and a set of network parameter configuration information;
a configuration database for storage of a set of network parameter configuration information for each of at least one pre-designated communications provider;
a smart card for storage of information that corresponds to a requested communications service provider;
a configuration searcher for searching in the configuration database for a set of network parameter information that corresponds to the requested communications service provider, which service provider is requested by the smart card; and
a configuration processor for comparing the information relating to the designated communications provider, which is stored to the memory, with the information of the communications service provider requested by the smart card, when the designated information does not match the requested information, searching for a set of network parameter information corresponding to the communications service provider requested by the smart card through the configuration searcher, and configuring a network using the retrieved set of network parameter information.

2. The network parameter automatic configuration apparatus of claim 1, wherein the information relating to the communications service provider stored to the memory and the information of the communications service provider requested by the smart card are Mobile Country Code/Mobile Network Code (MCC/MNC) respectively indicative of country and communications service provider information.

3. The network parameter automatic configuration apparatus of claim 1, further comprising:
a configuration requester for generation of a configuration information request message which requests a set of network parameter information that corresponds to the communications service provider requested by the smart card and transmission of the configuration information request message to a provider server via a message server; and
a configuration receiver for receiving a configuration information response message comprising a set of network parameter information from the message server,
wherein, the configuration processor transmits the configuration information request message through the configuration requester when the configuration database does not contain the set of network parameter information corresponding to the communications service provider requested by the smart card, and configures the network using the set of network parameter information when the configuration information response message is received at the configuration receiver.

4. The network parameter automatic configuration apparatus of claim 3, wherein, the configuration database additionally stores a set of network parameter configuration information of a communications service provider which services the portable terminal.

5. The network parameter automatic configuration apparatus of claim 3, wherein the configuration information request message requests an Over The Air (OTA) provisioning from the provider server via the message server.

6. The network parameter automatic configuration apparatus of claim 5, wherein the configuration information request message is transmitted to the message server using one of a Short Message Service (SMS) and an Unstructured Supplementary Service Data (USSD).

7. The network parameter automatic configuration apparatus of claim 1, wherein the configuration processor, before the network parameters are configured, receives a service to be set from a user, the service selected by the user from available services of the portable terminal, and the configuration processor configures only the service selected by the user.

8. The network parameter automatic configuration apparatus of claim 3, wherein, when the configuration information request message is received from the message server, the provider server performs an OTA provisioning.

9. The network parameter automatic configuration apparatus of claim 8, wherein, the OTA provisioning of the provider server transmits to the portable terminal the configuration information response message including the requested set of network parameter information.

10. The network parameter automatic configuration apparatus of claim 3, wherein, when the network is configured using the set of network parameters retrieved from the configuration database and an error in the configured network is detected, the configuration processor transmits the configuration information request message through the configuration requester and reconfigures the network using the set of network parameter information of a configuration information response message when the response message is received through the configuration receiver.

11. A network parameter automatic configuration method of a portable terminal, the method comprising:
when detecting a network parameter automatic configuration event, comparing information relating to a designated communications service provider with information relating to a communications service provider requested by a smart card, said comparing to produce a comparison result;
when the comparison result indicates a non-match, searching for a set of network parameter information corresponding to the communications service provider requested by the smart card, in a configuration database which stores a set of network parameter configuration information corresponding to at least one communications service provider; and
when the set of network parameter information corresponding to the communications service provider requested by the smart card is retrieved, configuring a network using the retrieved set of network parameter information.

12. The network parameter automatic configuration method of claim 11, wherein, the information relating to the designated communications provider and the information of the communications service provider requested by the smart card are Mobile Country Code/Mobile Network Code (MCC/MNC) respectively indicative of country and communications provider information.

13. The network parameter automatic configuration method of claim 11, further comprising:
when the configuration database does not contain the network parameter information corresponding to the communications service provider requested by the smart card, generating a configuration information request message which requests the set of network parameter information corresponding to the communications service provider requested by the smart card;
transmitting the generated configuration information request message to a provider server via a message server; and
when a configuration information response message is received from the provider server, configuring a network using a set of network parameter information comprising the configuration information response message.

14. The network parameter automatic configuration method of claim 13,
wherein the configuration database further stores network parameter configuration information of a communications service provider which services the portable terminal.

15. The network parameter automatic configuration method of claim 13, wherein the configuration information request message requests an Over The Air (OTA) provisioning of the provider server via the message server.

16. The network parameter automatic configuration method of claim 13, wherein, the configuration information request message is transmitted to the message server using one of a Short Message Service (SMS) and an Unstructured Supplementary Service Data (USSD).

17. The network parameter automatic configuration method of claim 11, wherein, before the network parameters are configured, a service to be set is selected by and received from a user said service being selected from among available services of the portable terminal and only the selected service is set.

18. The network parameter automatic configuration method of claim 13, wherein, when the configuration information request message is received from the message server, the provider server performs the OTA provisioning.

19. The network parameter automatic configuration method of claim 18, wherein the OTA provisioning of the provider server transmits to the portable terminal the configuration information response message including the requested set of network parameter information.

20. The network parameter automatic configuration method of claim 11, further comprising:
configuring the network using the set of network parameters retrieved from the configuration database;
when an error is detected in the network configuration, performing -
generating a configuration information request message to request a set of network parameter information corresponding to the communications service provider requested by the smart card;
transmitting the generated configuration information request message to a provider server via a message server; and
when a configuration information response message is received from the provider server, reconfiguring the network using a set of network parameter information comprising the configuration information response message.
